# EUROPEAN PATENT APPLICATION

(11) **EP 1 457 114 A1**
(43) Date of publication of application: **15.09.2004**
(21) Application number: 02789005.2
(22) Date of filing: 27.11.2002
(51) Int. Cl.: A21D 2/00

(54) **NIXTAMALIZED CORN AND PRODUCTS OBTAINED FROM SAME**

(30) Priority: 28.11.2001 MX 0112210
(71) Applicant: CENTRO DE INVESTIGACIONES Y DE ESTUDIOS AVANZADOS DEL I.P.N., Mexico, D.F. 07360 (MX)
(72) Inventor: FIGUEROA CARDENAS, Juan de Dios, Mexico,D.F. (MX); MORALES SANCHEZ, Eduardo, Mexico,D.F. (MX); GONZALEZ HERNANDEZ, Jesus, Mexico,D.F. (MX); ARAMBULA VILLA, Geronimo, Mexico,D.F. (MX)
(74) Representative: Loveless, Ian Mark
(86) International application number: PCT/MX2002/000109
(87) International publication number: WO 2003/045154

(57) **Abstract**

Improved methods for the formation of nixtamalized corn can result in the reduction or elimination of wastewater. In some embodiments, the method comprises hydrating a corn composition for a time of at least 5 minutes, and in further embodiments from about 5 minutes to about 5 hours. In some embodiments, the corn composition comprises cracked corn, water and no more than about 0.55 weight percent lime relative to cracked corn weight. In additional or alternative embodiments, the corn is combined with water at a temperature of at least about 70°C at a pH from about 6 to about 7.5 pH units. In further embodiments, the cracked corn has a particle size of less than about 3.5 mm average size. The resulting corn dough can have a water content of about 45 to about 55 weight percent.

## Description

### FIELD OF THE INVENTION

The invention relates to the formation of processed corn dough and to tortillas and dried corn flours formed from the fresh corn dough. The invention further relates to efficient and environmentally less harmful approaches to the formation of nixtamalized corn.

### BACKGROUND OF THE INVENTION

The history of the corn tortilla has Indian roots and goes back to the origin of the Mexican town. In the traditional processing approaches, the basic stages for tortilla preparation have remained unaltered from those times. The corn tortilla is the most important food of Mexico and for some countries of Central America. Corn tortillas are considered the main protein source and calorie source for social groups of low economic levels. Corn tortilla consumption is presently on the increase in the United States. Also, the corn tortilla is a basic ingredient in the production of a variety of traditional foods such as snack foods, tacos, tostadas, enchiladas, burritos and nachos. In Mexico, under diverse forms of consumption, the tortilla is part of the diet at all social levels with an annual consumption of up to 120 kg per capita. In rural areas, corn tortillas make up approximately 70% of the total ingested calories, constituting the main source of food.

The tortilla making process involves the formation of corn dough called masa. The traditional nixtamalization process consists of an alkaline processing of the corn grain in boiling water for 30-40 minutes at a water-to-corn ratio of about 3 parts water to 1 part corn. Before cooking, 1-2 weight percent lime as a fraction of the corn weight is added. After this cooking step, the cooked corn is left in the water for a period of 12 to 18 hours. The resulting hydrated corn separated from the excess water is called nixtamal, and the liquid rich in cooked solids is called najayote, which is wastewater that must be disposed such as by draining to a sewer. The nixtamal is washed to remove solubilized pericarp and excess lime. The washing consumes 1 to 2 parts of additional water per part of dry corn, and this water is additional wastewater that must be disposed. After washing, the nixtamal is milled, such as with a stone mill, with the addition of small volumes of water. After milling, the resulting dough can be molded to form tortillas and cooked. The traditional cooking of the tortilla generally involves the cooking of both sides of the tortilla at temperatures of 180-210°C on a mud, metallic or ceramic surface for approximately 2 minutes.

At a commercial level, the corn may be cooked using different processes such as processes that involve cooking in containers with injected steam or continuous processing of drums of corn for forming nixtamal. In some processes, pots containing corn, water and lime are injected with steam until they reach a temperature near boiling. Lower temperatures generally can be used for snack production rather than tortilla production. Then, the mixture is left to settle for the remaining hydration period. For the production of fresh dough, the nixtamal is washed and milled. The washing process, for example, can be performed in rotary horizontal barrels or drums where the water is added in the form of a spray. For the production of tortillas, the dough is formed in circular pieces, and the cooking can be performed on bands/conveyors in which the pieces are flash heated to temperatures between 300-320°C, for example, with LP gas. Alternatively, the fresh dough can be dried and ground to form a flour of cooked corn. Dried precooked or instant (dry masa) corn flour is gaining in popularity, especially in the urban population due to the reduction of intensive and tedious work of the traditional process.

### SUMMARY OF THE INVENTION

In a first aspect, the invention pertains to a process for the nixtamalization of corn. The process comprises hydrating a corn composition for a time of at least 5 minutes, and in some embodiments from 5 minutes to about 5 hours. The corn composition comprises a blend of a cracked corn, water and no more than about 0.55 weight percent lime relative to the cracked corn weight.

In a further aspect, the invention relates to an additional or alternative process for the nixtamalization of corn. The process comprises hydrating cracked corn for a time of at least 5 minutes at a pH from about 6 to about 7.5 pH units. The water is at a temperature of at least about 75 degree C when combined with the cracked corn.

In an additional aspect, the invention relates to another additional or alternative process for the nixtamalization of corn. The process comprises hydrating cracked corn for a time of at least 5 minutes from a cracked corn with a particle size less than about 3.5 mm average size.

In another aspect, the invention relates to a corn dough mass comprising a homogenous hydrated cracked corn composition with a moisture content from about 45 to about 55 weight percent and a pH from about 6.0 to about 7.5.

### BRIEF DESCRIPTION OF THE DRAWINGS

Fig. 1 is a flow chart depicting an embodiment of a process for nixtamalizing whole corn kernels into corn products such as tortillas or dried corn flour.
Fig. 2 is a flow chart of an embodiment of a process for nixtamalizing corn in which the pericarp is separately milled for inclusion in the nixtamalization process.
Fig. 3 is a flow chart depicting an embodiment of a process for nixtamalizing corn in which fines from an initial milling of the whole corn kernels are separately introduced into a hydration process.

### DETAILED DESCRIPTION OF THE INVENTION

Processes have been discovered for the efficient commercial production of nixtamalized corn with the reduction or elimination of wastewater. The improved processes described herein can be performed in a relatively short period of time. The reduction or elimination of wastewater both increases the nutrient value of the resulting corn dough and significantly reduces quantities of a pollutant, i.e., wastewater, that is difficult to dispose of without significant cost or environmental damage. While the reduction or elimination of wastewater correspondingly improves nutrient content since nutrients are not eliminated with the wastewater, the entire corn kernel can be incorporated into the process such that yields are also improved. The nixtamalized corn can be used as fresh dough for the production of tortillas and other corn products or dried to form instant flour that can be used later to form rehydrated dough. The processes described herein can be efficient in terms of yield, hydration levels, energy consumption (since smaller amounts of water need to be heated) and low cost of production. The processes described herein are generally based on the use of cracked corn that is hydrated. In some embodiments, the processing can be performed with reduced amounts of alkaline compositions, e.g. lime (calcium hydroxide and/or calcium oxide). In other embodiments, the processing can be performed at relatively high temperatures that are maintained during the hydration process. Generally, all of the added water is incorporated into the dough, and no additional washing is needed following the hydration step.

Any variety/genotype of corn can be used in the nixtamalization process, although certain corn varieties may be desirable due to taste, texture and other properties. For example, in Mexico, white corn varieties are traditionally used to form masa. Corn is removed from the cob as kernels. The whole kernel can be used in the nixtamalization processes described herein. Alternatively, portions of the pericarp and/or germ can be removed to form decorticated corn for further processing, as described further below. In some embodiments, for performing the hydration process, the kernel can be cracked in a mill or the like. Generally, the corn initially has roughly 10 to 15 weight percent water as received from growers, although this water amount can vary due to a variety of factors. The amount of water added in the hydration process can be adjusted to obtain a desired hydration level for the resulting dough. In general, the relevant parameters for the commercial processing to form nixtamal include, for example, the type of corn, time and temperature of heating, alkaline/lime concentrations, frequency of stirring to maintain the lime in suspension and the process of washing the nixtamal.

The nixtamalization process involves hydration and milling to form fresh dough. The hydration of the corn generally involves the addition of desired amounts of water and lime to form a hydration mixture. The hydration mixture can be heated to facilitate the hydration process. During the hydration process, the starch of the corn kernel generally becomes hydrated. The time of the hydration process can be selected to yield appropriately hydrated corn product. In some embodiments, relatively high temperatures are used for the water prior to addition to the corn and additional heat may or not be added during the time of hydration. In some embodiments, with the balance of processing features described herein, reduced amounts of lime can be used. Processing features are described further below.

At the end of the selected period of time, the hydrated corn generally can be ready for further processing into dough without washing or removal of excess water. The milling of the hydrated corn is performed to produce smooth, fresh dough, i.e., masa. Milling can be performed in a stone mill or other mill that provides for the application of shear force without excessive mechanical damage to the starch or other chemicals in the grain. This milling step crushes the corn particles (nixtamal) into small particles that form the cohesive structure of the dough. The fresh dough or masa is ready for further processing. Specifically, the milled product can be a partially gelatinized material that can be utilized in the formation of corn products. While nixtamalized corn is generally considered cooked, the distinguishing characteristic of nixtamalized corn is the dispersion and hydration of starch concentrations in the corn kernel such that fine dough is formed that is cohesive and machinable but not significantly sticky. The hydration of the corn kernel can be effected by a combination of effects generally with a contribution from heating.

Following hydration and milling of the corn, the fresh dough can be processed into tortillas or other products, stored for later use and/or dried. The tortillas can be immediately consumed, stored for later consumption or fried into tacos, chips or the like. The formation of tortillas and other products is described further below. Alternatively or additionally, the fresh dough/masa can be stored for distribution to tortilla manufacturing operations, individuals and the like for the formation of tortillas and other products from the fresh dough. In some embodiments, some or all of the dough can be dried to form a dried corn product. Formation of dried flour can involve dehydration, milling and, optionally, sieving. Specifically, the dried dough mass can then be milled into flour with a desired consistency. The resulting flour can be instant masa flour since the starch in the product is effectively hydrated or gelatinized by the nixtamalization process. Thus, the flour can be rehydrated in a relatively short period of time to form re-hydrated dough that can be formed into tortillas or other corn products.

The processes described herein can be relatively fast and ecological methods for the production of fresh, nixtamalized dough which eliminates many of the costly, time consuming, pollution causing steps carried out in the traditional nixtamalization process for tortilla preparation. In particular, the processes herein can be used in the preparation of fresh dough/masa and/or dry instant masa flour with improved mechanical and nutritional properties compared with the traditional nixtamalization process. Contaminating effluents, such as wastewater, are greatly reduced or eliminated. Furthermore, the improved processing generally can be performed with readily available equipment, such that capital equipment costs are not prohibitive. Relative to processes that do not incorporate the pericarp, the yields can be increased, for example, 4-10 weight percent. The overall water absorption can be increased relative to traditional processing, which results in extended shelf life and improved textural quality related to reliability, tensile strength and softness of the tortillas produced from the dough.

The traditional processing also can result in the loss of important thiamine, riboflavin, fat and fiber from the corn grain. Furthermore, the liquid nejayote contains solid fragment particles of pericarp (fiber), starch, protein and soluble germ, which can be difficult to biodegrade. Also, subjective determinations and empirical methods are used at each stage of the process that make the process less reproducible than desired with respect to the quality of the end product. Some efforts have been made to make the traditional process more efficient by adjusting the traditional parameters without altering the basic characteristics of the nixtamalization process, as described in U.S. Patent 4,594,260 to Bressani et al., entitled "Process For Producing Nixtamalized Corn Flour," incorporated herein by reference.

Instant dry masa corn flours are dehydrated and ground nixtamalized corn that can be rehydrated to form dough that can be used to make tortillas and/or snacks. In general, reduced hydration/cooking is required in forming the nixtamalized corn since the dehydration process causes additional gelatinization. In contrast with the methods described herein, commercial production of flours and dried, instant corn flours using traditional processing use significant amounts of water, energy, time and space. The processing parameters significantly affect the properties of the resulting flours. General processes for the formation of instant corn flours are described, for example, in U.S. Patent 2,584,893 to Loyds et al., entitled "Method Of Making a Tortilla Flour," U.S. Patent 3,194,664 to Eytinge, entitled "Method For Continuously Producing Nixtamal," and U.S. Patent 4,513,018 to Rubio, entitled "Continuous Production Of Corn Products," all of which are incorporated herein by reference.

In contrast with the approaches described herein to produce nixtamalized corn and dried corn flour, Montemayor and Rubio describe a continuous process and batch process for the production of cooked corn in the formation of instant corn flour. ("Alkaline cooked corn flour: technology and uses in tortilla and snack products," abstract Cereal Food World, 28-577 (1983), incorporated herein by reference.) In these processes, lime is mixed with corn and water in a spiral transporter connected with a steam injector. The corn is cooked as it is transported. After cooking, the product is washed to remove part of the pericarp and excess lime. After washing, the corn is dehydrated and milled to obatin flours.

Molina et al. describe the production of instant flours using drum dryers operating under pressure. (Molina et al., "Drum drying technology for the improved production of instant tortilla flour," J. Food Science, 42: 1432-1434 (1977), incorporated herein by reference.) Mendoza describes a process using steam cooking after the addition of lime. (U.S. Patent 3,859,452 to Mendoza, entitled "Method For Obtaining Nixtamalized Flours," incorporated herein by reference) Flour production has been described based on infrared radiation. See, for example, U.S. Patent 4,555,409 to Hart, entitled "Cereal Processing," and Johnson et al., " Tortilla-making characteristic of micronized sorghum and corn flours," J. Food Science 45:671 (1980), both of which are incorporated herein by reference.

In general, dried flour production consumes significant amounts of energy. Costs for the dried flour are generally higher than the corresponding costs of products made from fresh dough. Also, products made from the fresh dough may have more desirable characteristics than corresponding products produced from the dried flour. However, the advantages of forming nixtamalized corn described herein can be carried over to the formation of dried corn flour in addition to the formation of products from fresh masa/corn dough or nixtamal.

### Composition Of Nixtamalized Corn

The processing of corn kernels to form nixtamal as described herein generally comprises the formation of crushed corn kernels that are combined with water and an alkaline composition/lime to form a hydration mixture. The hydration mixture can then be stored for the hydration period with optional mixing and generally heated during at least a portion of the hydration period to obtain desired levels of hydration/gelatinization of the corn material. While embodiments can include lime in various concentrations, in some embodiments the amount of lime is significantly less than in the traditional tortilla forming process. Following hydration of the corn, the corn can be further processed into desired products. Generally, the process does not produce wastewater from the hydration process.

The corn can be obtained generally from corn plants of any variety of corn (Zea Mays). Certain corn plants may be desirable for the particular taste of the corn kernel, and this taste can vary from one population to another. Corn used in the traditional nixtamalization process is appropriate for the processes described herein. In Mexico, white corn is traditionally used for the formation of masa.

The process can incorporate whole corn kernels or portions thereof. The whole corn kernels are removed from the cob, and generally the kernels are washed to remove cob fragments and other contaminants. The major portions of a corn kernel are the pericarp, the endosperm and the embryo or germ. The outer portion of the corn kernel is called the pericarp and is fibrous consisting mainly of cellulose. The fibrous nature of the pericarp can make it difficult to process into nixtamalized corn dough. However, whole corn kernels with the entire pericarp can be kept in the processes described herein to form high quality corn dough (masa) and resulting tortilla products with desirable texture and taste. Nevertheless, portions or all of the pericarp and/or germ can be removed prior to processing into nixtamalized corn. The corn following removal of portions of the grain can be referred to as decorticated corn. Removal of parts of the kernel can result in the loss of significant nutrients, such as fat, fiber, protein and vitamins, as well as in a lower yield of nixtamalized corn dough. Similarly, different portions of the corn kernel can be processed differently for the formation of nixtamalized corn.

In some embodiments, the corn kernels are crushed prior to the hydration step. If desired, fine particles of corn can be separated, for example for separate processing. Similarly, the pericarp can be separately processed and recombined into a final product. The crushing process and the processing of the corn prior to hydration is described further below. However, a particular amount of corn is incorporated into the hydration process, and this amount of corn is generally the standard by which other quantities are evaluated with respect to amounts. Thus, the quantity of corn used for hydration can comprise, for example, crushed corn kernels, whole kernels, portions thereof or combination thereof.

The selected corn with any preliminary processing is hydrated. To perform the hydration, selected amounts of water, lime and any additional additives are combined with the corn. While excess water can be added, the addition of a desired amount of water for hydration with all of the water being incorporated into the hydrated corn materials eliminates the removal and disposal of any excess water. In forming fresh dough, water is incorporated into the corn mass such that dough with appropriate consistency is formed.

In general, the amount of water is selected to yield a total amount of water. Thus, if the initial amount of water in the corn is estimated, the amount of added water can be adjusted to yield the desired hydration level for the resulting nixtamalized corn and corresponding fresh dough. Generally, the corn obtained from farmers for the formation of nixtamalized corn has a humidity level in the range from about 10 weight percent to about 15 weight percent, although total water levels can be adjusted for other values of initial water content. The total water content of the nixtamalized corn can be adjusted to desirable values although for a reasonable period of hydration time there may be a limit on the amount of water that can be roughly homogenously incorporated into the corn. Generally, the water is added during a hydration period although additional water can be added at the milling stage at which the hydrated corn is milled to form fresh dough.

For the production and sale of hydrated, fresh dough, it is generally desirable to incorporate a larger amount of water into the dough. Higher amounts of water result in increased yields as determined by the weight of the dough. However, for the production of dry, cooked corn flour (e.g., instant dry masa flour), without intending to be limited by theory, additional gelatinization of the corn starch may take place during the drying process such that less water can be used to produce the corresponding fresh dough while subsequently forming a corn flour that yields corn products with the desired consistency and taste. Since energy is required to remove the water to form a dry flour, the use of less water also results in an energy savings. The nixtamalized corn as a fresh dough generally has a total humidity content from about 45 weight percent to about 60 weight percent and in other embodiments from about 45 weight percent to about 55 weight percent and in further embodiments from about 50 weight percent to about 52 weight percent. Total humidity levels of about 50 weight percent result in excellent properties for the fresh dough, especially cohesion, and especially for the resulting tortillas, highly reproducible product properties. A person of ordinary skill in the art will recognize that additional ranges of humidity levels within these explicit ranges are contemplated and are within the present disclosure.

An alkaline composition, generally lime, can be added to the hydration mixture to facilitate the hydration process. Suitable alkaline agents include, for example, calcium oxide, calcium hydroxide and mixtures thereof. Lime is a common name for calcium oxide, CaO, and calcium hydroxide, (Ca(OH)₂), also know as slaked lime. Lime dissolves in water to form calcium hydroxide. In some embodiments, lime is added to result in a pH of about 6 to about 7.5 and in other embodiments from about 6 to about 7 pH units. A person of ordinary skill in the art will recognize that additional ranges within these explicit ranges of pH are contemplated and are within the present disclosure.

In general, the amount of lime may be no more than about 2.5 weight percent, in other embodiments, no more than about 0.55 weight percent and in further embodiments from about 0.1 weight percent to about 0.3 weight percent and in additional embodiments from about 0.1 weight percent to about 0.25 weight percent. A person of ordinary skill in the art will recognize that additional ranges of lime concentration within these explicit ranges are contemplated and are within the present disclosure. These weights are based on Ca(OH)₂, which is the form of food grade lime. To the extent that calcium oxide is used rather than calcium hydroxide, the weight of calcium oxide can be correspondingly evaluated by considering the desired amount of calcium hydroxide as a combination of CaO and H₂O such that the weight can be distributed accordingly as calcium oxide and water. Then, the lower weight of calcium oxide can be added and a correspondingly larger amount of water can be added.

### Processing To Form Nixtamalized Corn

In some embodiments, the formation of nixtamalized corn can comprise, for example, cracking the corn, combining the corn with, at least, water and lime, hydrating the corn mixture and milling the hydrated corn composition. The preparation of the cracked corn can involve separation of corn components either for separate processing or inclusion of only a portion of the corn kernel in the nixtamalization process. The hydration process generally involves the addition of heat to maintain the hydration mixture at or near a selected temperature for at least a portion of the hydration time. The milling of the hydrated corn mixture forms fresh dough (masa). The fresh dough can then be processed into products as fresh dough or dried into flour, as described further in the following section.

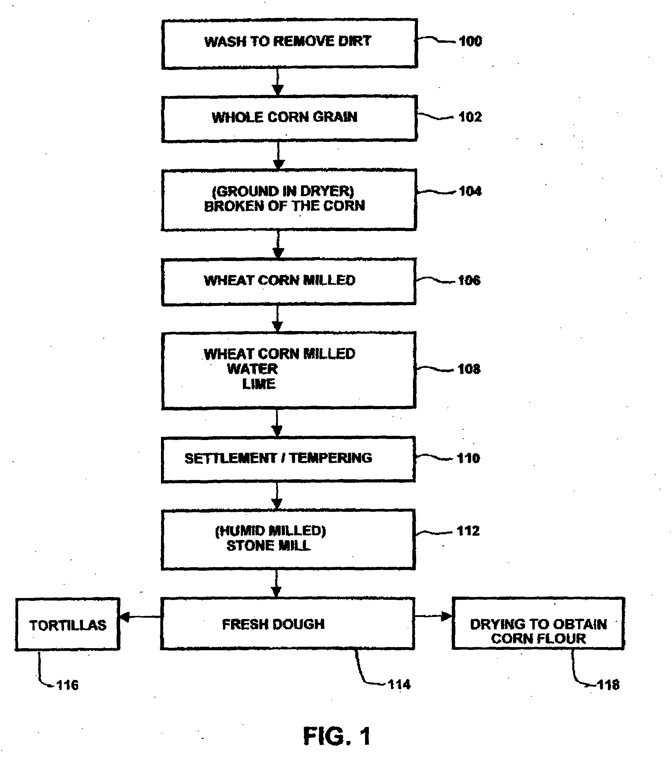

One embodiment for the formation of nixtamalized corn is outlined in Fig. 1. The corn removed from the cob optionally can be cleaned 100, for example, by washing, to remove impurities and to form the whole grain corn 102 for further processing. In some embodiments, the corn kernels are crushed prior to the hydration step. Specifically, the whole grain corn can be strained from the cleaning water and milled or cracked 104 to form milled corn 106. Milled corn 106 can be combined 108 with water, lime and any additional additives to form a hydration mixture. The hydration mixture can be settled 110 in an appropriate container for the completion of the hydration process. Following hydration, the hydrated corn mixture can be milled 112 to form fresh dough 114. The fresh dough can be processed into products 116 or dried 118 to obtain corn flour.

In some embodiments, a portion of the whole corn kernel is used in the formation of the nixtamalized corn. For example, the corn can be processed to separate a portion of the corn kernels prior to continuing the processing. The removal of the outer portions of the kernel can be accomplished, for example, with mechanical abrasion or polishing. Specifically, the corn can be passed through a degerminating mill to remove the hull/pericarp from the remainder of the kernel, as described further in U.S. Patent 4,738,772 to Giesfeldt, entitled "Process For Separating Fiber From Dry-Milled Corn," incorporated herein by reference. Alternatively, the kernels can be passed through a polishing chamber with the amount of pericarp removed being related to the time spent in the polishing chamber. In one embodiment to perform the polishing, corn is introduced into a generally cylindrical chamber with perforations or slits along the longitudinal sides of the chamber. A rotating cylinder with protruding conveying flights moves the corn down the chamber while abrading corn against the perforations or slits removing the bran (i.e., pericarp). More or less polishing is accomplished by restricting the outlet of the chamber; more restriction results in higher level of polishing. The separated pericarp and/or other portions of the kernel can be discarded or separately processed for reincorporation into the nixtamalization process.

In general, the crushing or milling 104 of the corn kernels can be performed in a mill with hammers or blades that break up the kernels. In some embodiments, corn is introduced into a chamber where hammers or blades are rotating around a central axis. The hammers or blades impact the corn causing breakage such that the particles pass through a surrounding screen that is perforated with holes, the particle size being determined by the size of the holes in the screen. In some cases a screen is not used because the impact of the hammers or knifes is sufficient to produce particle sizes desired. Suitable hammermills are Jacobson, Buhler Inc. (Minneapolis, MN), and Bliss Industries (Ponca City, Oklahoma). This can be performed with whole corn kernels or kernels with the pericarp partially or totally removed. The breaking of the kernels facilitates the hydration process, although whole kernels can be used in the hydration process. While any breaking of the whole kernels can be advantageous, the kernels can be milled to a weight average particle size of no more than about 5 mm, in other embodiments from about 4.5 mm to 0.1 mm and in further embodiments from about 4 mm to about 0.1 mm. Particle size is evaluated by the ability to pass through sieves with standard sized openings.

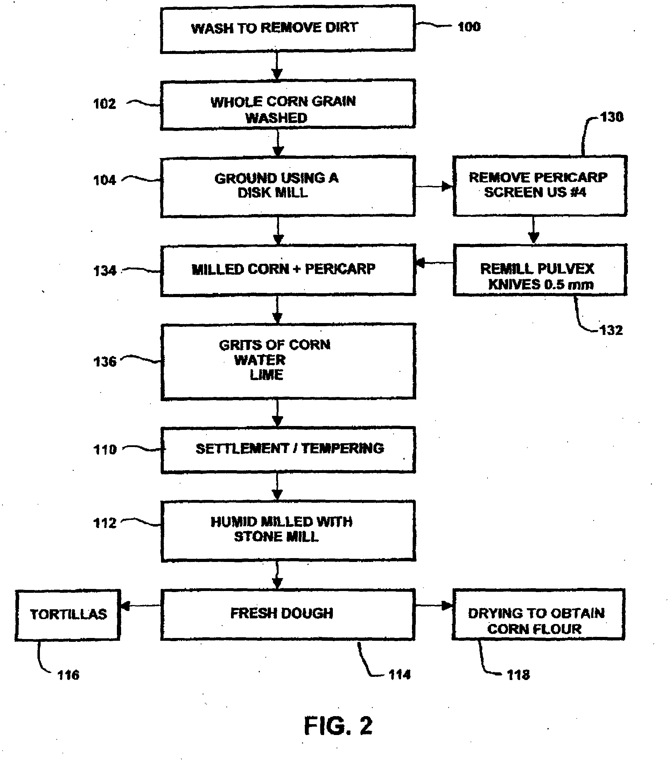

In some embodiments, the milling 104 of the corn kernels can be used to facilitate separate processing of different portions of the corn kernels. Referring to Fig. 2, whole corn is milled 104, and the milled corn can be passed 130 over a screen, such as a U.S. number 4 screen, to separate a portion that includes an enhanced fraction of the pericarp, which remains on the screen as the remaining portions pass through the screen. The pericarp is fibrous such that it remains in larger sections in the crushing process.

It may be desirable to reintroduce the pericarp into the nixtamalization process such that the yield is not reduced. Also, the hydration of the pericarp can be facilitated by further milling of the pericarp into smaller fragments. Referring to Fig. 2, the pericarp can be remilled 132, for example, with a mill having knives, to produce pericarp fragments, such as fragments with an average particle size of about 0.5 mm or less. The remilled pericarp can be recombined 134 with the remaining portions of the cracked corn kernel to form a crushed corn blend. Then, the crushed corn blend can be combined 136 with water and lime to form a hydration mixture including the initially crushed corn that passed through the sieve and the remilled pericarp. Alternatively or additionally, the components or portions thereof of the hydration mixture can be combined in a different order to form an equivalent hydration mixture. This hydration mixture can be hydrated and further processed to form the desired products.

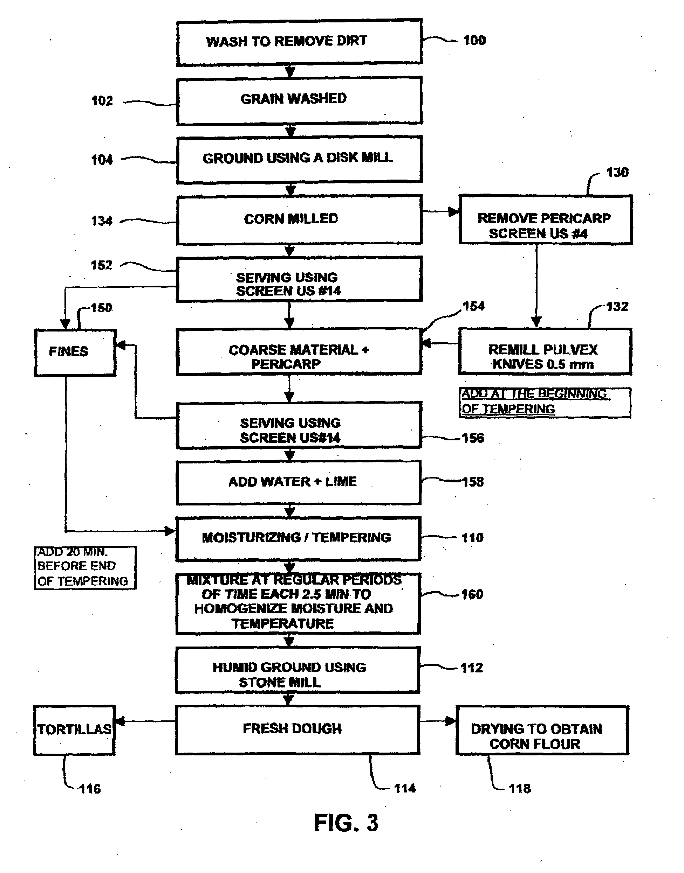

In additional embodiments, the crushed corn kernels are sieved to separate fines that are introduced into the hydration process at a later stage such that the fines are not processed for hydration as long as the other portions of the corn. Since the fines do not need to be hydrated as long, the introduction of the fines at a later stage reduces the energy needed to heat the hydration mixture for embodiments in which the hydration mixture is heated during the hydration process and may reduce the processing time. Furthermore, by reducing the competition for water between the fines and the remaining portions of the cracked corn, more uniform hydration can be achieved such that a more uniform dough/masa is obtained. Referring to a specific embodiment in Fig. 3, fines 150 are separated 152 from the remaining portions of the kernel after removal 130 of some or all of the pericarp by passing the fines through a U.S. Number 14 screen 152 while the coarser portions remain on the screen. The pericarp can be remilled 132 and recombined with the milled corn with the fines removed 154.

If the pericarp is separately remilled, the remilled pericarp and/or the recombined milled kernels and remilled pericarp can be passed 156 over a Number 14 screen to separate additional fines, which pass through the screen while coarser portions remain on the screen. The total amount of fines collected can be introduced into the hydration mixture at a later stage of the hydration process, such as twenty minutes prior to the completion of the hydration process. The desired time for adding the fines can be determined empirically to obtain desired consistency of the dough. In some embodiments, the separating 154 of the fines after remilling of the pericarp can be performed without separating 152 of the fines at an earlier stage of the process. The crushed corn with the fines removed can be combined 158 with water and lime to form a hydration mixture.

The hydrating 110 of the crushed corn can be performed in any suitable container. In general, the hydration mixture can be mixed to combine the ingredients. The order of combining the ingredients may not matter. Furthermore, the hydration mixture can be mixed intermittently, periodically or continuously during the hydration process, although no mixing needs to be performed once the initial mixture is formed. For example, referring to Fig. 3, the hydration mixture can be mixed 160 every 2.5 minutes to obtain a more uniform composition and temperature through the mixture. The hydration process can be performed within a commercial mixer, blender or hopper of an appropriate size, which are readily available. The desired time for the hydration may vary somewhat depending on the particle sizes, temperature of hydration, the amount of mixing and the particular apparatus used to perform the hydration.

In general, the water may or may not be heated prior to combining with the corn and/or other ingredients. In embodiments of particular interest, the water is heated prior to addition to the corn, although the corn may cool the water below its initial temperature until additional heat can be added. In some embodiments, the hydration mixture is not heated further during the hydration process. For these embodiments, the hydration mixture generally is not mixed after an initial mixing so that the mixture does not cool excessively during the hydration process. Also, the mixture may be covered. In particular, the water, optionally with lime, can be heated at a temperature greater than room temperature, in some embodiments at least about 80°C, and in further embodiments from about 85°C to about 95°C.

In other embodiments, the mixture is heated through the hydration period, although the temperature can vary during the hydration period. If heat is added during the hydration process, it may be desirable to mix the mixture occasionally or continuously to avoid any portion of the mixture from overcooking or drying. Furthermore, the temperature during the hydration process can fluctuate over a range and/or can be changed during different portions of the hydration process. The amount of heating can be selected to complete the hydration in a desired amount of time and to produce dough with desired texture. In particular, the hydration mixture can be heated at an average temperature greater than room temperature, in some embodiments at least about 80°C, and in further embodiments from about 85°C to about 95°C. If heat is added after combining the water and the crushed corn, the hydration mixture can be mixed to prevent excess heating or drying of a portion of the mixture.

Whether or not the hydration mixture is heated after combining the water and the crushed corn, the process of hydrating of the mixture generally can be performed for at least about 5 minutes, in some embodiments for about 5 minutes to about 5 hours, in further embodiments from about 30 minutes to about 4 hours and in additional embodiments from about 45 minutes to about 2 hours. A person of ordinary skill in the art will recognize that additional ranges within the explicit ranges of hydration temperatures and time are contemplated and are within the present disclosure.

In the resulting hydrated corn composition the water is incorporated into an agglomerated mass comprising the corn. In particular, the starch of the corn is hydrated/gelatinized such that the hydrated corn essentially retains the water within the mass. Generally, no excess water needs to be removed as wastewater. The hydrated nixtamalized corn is moist with crumbly discrete corn particles. The hydrated corn is ready for milling into dough/masa.

The milling of the hydrated corn into dough can be performed with a variety of milling apparatuses. In general, the milling approach should be capable of grinding the hydrated corn to form corn dough with an appropriate consistency. The grinding further causes heating by friction of the hydrated corn. The mill should apply an appropriate amount of shear force to avoid excessive mechanical damage to the starch or other chemicals of the grain. Similarly, the application of reasonable amounts of shear forces in the grinding generally avoids adversely affecting the physical and rheological properties of the resulting dough. Suitable milling apparatuses include, for example, a stone mill. In some embodiments, the hydrated corn is milled in a stone mill with an opening between the stones of 0.5 mm. While a majority of the water incorporated into the dough is generally added during the hydration process, additional water can be added during the milling process to achieve the total amount of desired water in the fresh dough. The resulting dough composition can be called fresh dough or masa, which is ready for formation into products.

### Product Formation

The fresh dough formed from the nixtamalized or hydrated corn can be directly converted into food products, such as tortillas 116, or dried 118 to form a dried corn product, see Figs. 1-3. Suitable food products include tortillas and snacks, which may be formed directly from the dough or from tortillas (e.g., tacos), which are first formed prior to snack formation. Alternatively, all or a portion of the nixtamalized corn can be dried into a dried corn product. The dried corn product can be ground into dried flour, e.g., instant dry masa flour. Instant dry masa flour can be later rehydrated to form dough for the formation of tortillas, snacks and the like.

For the formation of tortillas from the fresh dough, a desired unit mass of dough is separated the total dough. The unit mass of dough is shaped into a selected tortilla shape, which is generally flat and round, although other shapes can be used. The tortillas generally are cooked on a hot surface. For manual production by consumers, the tortillas can be cooked on each side at a temperature from about 180°C to about 210°C for about 2 minutes per side. For commercial scale production, the tortillas can be cooked, for example, on band conveyor or the like in which the tortillas are cooked at temperatures of about 300°C to about 320°C. In general, the heat can be generated by any reasonable source, such as steam, a water bath, dielectric cooking, microwave cooking, infrared cooking, natural gas cooking, LP gas cooking, kerosene cooking and the like. Snacks, such as tortilla chips, can be formed from the tortillas by frying the tortillas or a portion thereof.

Drying of the fresh dough involves the removal of a significant portion of the water from the dough. Following drying, the moisture content generally is less than about 15 weight percent of the dough. The drying process can lead to additional gelatinization of the corn starch. Therefore, it may be desirable to modify the hydration process, for example, by shortening the hydration time and/or the total amount of water. The drying process generally can be adapted from processes for dehydrating conventionally nixtamalized corn. For example, the dough can be dried by the injection of warm dry air. Following drying, the dried corn product generally can be milled into a dry flour using any suitable mill. The dry corn flour can be stored for reasonable periods of time prior to consumption. When desired, the dried corn flour can be rehydrated to from rehumidified dough. The rehumidified dough can be processed into tortillas and other food products similarly to the fresh dough.

### EXAMPLES

### Example 1 - Formation of Fresh Corn Dough And Tortillas

This example describes the formation of fresh dough and tortillas from nixtamalized whole corn based on the improved processes described herein.

Whole kernel corn was cleaned to remove impurities and ground in a hammer mill to crack the corn. The corn was ground until an average particle size of about 4 mm was obtained. The cracked corn was placed into a mixer, and 0.8 parts by weight water per part corn was added at a temperature of 85°C to 90°C and lime was added at an amount of 0.3 weight percent as a fraction of the initial corn weight. Upon combining the ingredients, they were mixed, and then the mixer was turned off. The mixture was removed from the mixer into a container and covered for the remaining portion of the hydration period. The hydration mixture of the cracked corn, water and lime was maintained in the container for between 2 and 4 hours, gradually cooling during this period. After mixing the mixture had a temperature between about 55°C and 60°C and the center of the mass cooled to about 50°C during the hydration period.

After hydration the hydrated corn mixture was fed gradually into a stone mill with an opening between the stones of 0.5 mm. A small amount of additional water was added during milling to obtain the desired consistency. Dough was obtained with a water content of about 50 weight percent. The fresh dough was ready to be used to make tortillas and tortilla derivatives.

### Example 2 - Formation of Fresh Corn Dough With Decorticated Kernels

This example describes the formation of fresh dough and resulting products from corn in which part of the pericarp and germ has been removed.

The corn kernels were cleaned to remove impurities. The decorticating process partially removed the pericarp and germ with about 7 weight percent of the original corn weight removed. The decorticating process was performed in a decorticator that breaks germ and bran loose by impact. The decorticated corn was milled to form a cracked corn. The cracked corn was introduced into a mixer. Water was added at a temperature of about 80°C, and lime was added to an amount of about 0.25 weight percent relative to the weight of corn. After an initial mixing, the hydration mixture was allowed to rest for 30 minutes to effect the hydration.

After completion of the hydration, the hydrated corn mixture was gradually fed through a stone mill with an opening between the stones of 0.5 mm. Fresh dough with a water content of 40 weight percent was obtained. The fresh dough was passed through the mill again with additional water to obtain dough with a water content of 50 weight percent. The humidified fresh dough was ready for tortilla production.

### Example 3 - Formation of Dry Corn Flour From Nixtamalzed Corn

This example describes the production of dry corn flour from nixtamalized corn formed with whole corn kernels.

Whole corn kernels were cleaned and ground to form cracked corn. The milling of the corn was continued until the cracked corn had an average particle size of 4 mm. The cracked corn was placed into a mixer. Water was added to the mixer at a temperature from 85°C to 90°C, and lime was added to a concentration of 0.3 weight percent relative to the weight of the corn. The hydration mixture was hydrated for 2 hours.

After hydration was completed, the hydrated corn composition was ground in a stone mill with a separation between the stones of 0.5 mm. The resulting pre-cooked fresh dough had a hydration level of 50%. The fresh dough was dehydrated to form a dried corn product. The dried corn product was milled to form dry corn dough. The dried corn dough was suitable for forming tortillas following re-hydration.

### Example 4 - Formation of Dry Corn Flour From Nixtamalzed Corn

This example describes the production of dry corn flour from nixtamalized corn formed with corn kernels.

Corn kernels were cleaned and ground to form cracked corn. The milling of the corn was continued until the cracked corn had an average particle size of 4 mm. The cracked corn was placed into a mixer. Water was added to the mixer at a temperature from 85°C to 90°C, and lime was added to a concentration of 0.3 weight percent relative to the weight of the corn. The hydration mixture was hydrated for a time from 15 minutes to 2 hours.

After hydration was completed, the hydrated corn composition was ground in a stone mill with a separation between the stones of 0.5 mm. The resulting pre-cooked fresh dough had a hydration level of 50%. The fresh dough was dehydrated to form a dried corn product. The dried corn product was milled to form dry corn dough. The dried corn dough was suitable for forming tortillas following re-hydration.

The embodiments above are intended to be illustrative and not limiting. Additional embodiments are within the claims. Although the present invention has been described with reference to particular embodiments, workers skilled in the art will recognize that changes may be made in form and detail without departing from the spirit and scope of the invention.

## Claims

1. A method for the nixtamalization of corn, the process comprising hydrating a corn composition for a time of at least 5 minutes, the corn composition comprising a blend of a cracked corn, water and no more than about 0.55 weight percent lime relative to the cracked corn weight.

2. The method of claim 1 wherein hydrating the corn composition is performed for a time less than about 5 hours.

3. The method of claim 1 wherein hydrating the corn composition is performed for a time less than about 2 hours.

4. The method of claim 1 wherein the corn composition comprises a blend with no more than about 0.4 weight percent lime relative to the cracked corn weight.

5. The method of claim 1 wherein the corn composition comprises a blend with no more than about 0.3 weight percent lime relative to the cracked corn weight.

6. The method of claim 1 wherein the corn composition comprises a blend with sufficient water to have a blend with a humidity content of at least about 45 weight percent.

7. The method of claim 1 wherein the corn composition comprises a blend with sufficient water to have a blend with a humidity content from about 50 to about 60 weight percent.

8. The method of claim 1 wherein the cracked corn has an average grain size from 0.1 mm to 5 mm.

9. The method of claim 1 wherein the water is combined with the cracked corn at a temperature at least about 70 degrees C.

10. The method of claim 1 wherein water is combined with the cracked corn at a temperature from about 80 degrees C to about 90 degrees C.

11. The method of claim 1 further comprising milling the hydrated corn to form dough.

12. The method of claim 11 wherein the milling is performed with a stone mill.

13. The method of claim 12 wherein the stones of the mill have a gap of 0.5 mm.

14. A method for forming a tortilla comprising cooking at least a portion of the dough of claim 11.

15. A method for forming a dehydrated corn flour, the method comprising drying at least a portion of the dough of claim 11.

16. The method of claim 15 further comprising milling the dough following drying to form flour.

17. A method for the nixtamalization of corn, the process comprising hydrating cracked corn for a time of at least 5 minutes at a pH from about 6 to about 7.5 pH units with water wherein the water is at a temperature of at least about 75 degree C when combined with the cracked corn.

18. The method of claim 17 wherein hydrating the corn composition is performed for a time less than about 5 hours.

19. The method of claim 17 wherein the corn composition comprises a blend with no more than about 0.55 weight percent lime relative to the cracked corn weight.

20. The method of claim 17 wherein the corn composition comprises a blend with sufficient water to have a blend with a humidity content of at least about 45 weight percent.

21. The method of claim 17 wherein the cracked corn has an average grain size from 0.1 mm to 5 mm.

22. The method of claim 17 wherein the water is combined with the cracked corn at a temperature greater than about 80 degrees C.

23. The method of claim 17 further comprising milling the hydrated corn to form dough.

24. A method for forming tortilla comprising cooking the dough of claim 23.

25. A method for forming a dehydrated corn flour, the method comprising drying the dough of claim 23.

26. A method for the nixtamalization of corn, the method comprising hydrating cracked corn for a time of at least 5 minutes wherein the cracked corn has a particle size less than about 3.5 mm average size.

27. The method of claim 26 wherein the hydrating cracked corn is performed for a time from 5 minutes to about 5 hours.

28. The method of claim 26 wherein the corn composition comprises a blend with no more than about 0.55 weight percent lime relative to the cracked corn weight.

29. The method of claim 26 wherein the corn composition comprises a blend with sufficient water to have a blend with a humidity content of at least about 45 weight percent.

30. The method of claim 26 wherein the cracked corn has an average grain size from 0.1 mm to 2 mm.

31. The method of claim 26 further comprising adding water at a temperature greater than about 70 degrees C to cracked corn to initiate the hydration of the corn.

32. The method of claim 26 further comprising milling the hydrated corn to form dough.

33. A method for forming tortilla comprising cooking the dough of claim 32.

34. A method for forming a dehydrated corn flour, the method comprising drying the dough of claim 32.

35. A corn dough mass comprising a homogenous hydrated cracked corn composition with a moisture content from about 45 to about 55 weight percent and a pH from about 6.0 to about 7.5.

36. The corn dough mass of claim 35 wherein the cracked corn has an average dry grain size from 0.1 mm to 5 mm.
